Europäisches Patentamt

European Patent Office

Office européen des brevets

(11) Veröffentlichungsnummer: **0 149 100**
A2

# (12) EUROPÄISCHE PATENTANMELDUNG

(21) Anmeldenummer: 84114771.3

(22) Anmeldetag: 05.12.84

(51) Int. Cl.⁴: **G 02 C 7/02**
**G 02 C 7/06**

(30) Priorität: 05.12.83 DE 3343891

(43) Veröffentlichungstag der Anmeldung:
24.07.85 Patentblatt 85/30

(84) Benannte Vertragsstaaten:
IT

(71) Anmelder: Optische Werke G. Rodenstock
Isartalstrasse 43
D-8000 München 5(DE)

(72) Erfinder: Guilino, Günther, Dipl.-Ing. Dr.
Kriegelsteiner Strasse 3
D-8000 München 71(DE)

(74) Vertreter: Schiller, Walter, Dr.
Kanzlei Münich & Schiller Willibaldstrasse 36
D-8000 München 21(DE)

(54) Mehrstärken-Brillenglas mit hohem positiven Brechwert.

(57) Beschrieben wird ein Mehrstärken-Brillenglas mit hohem positivem Brechwert mit einer konvexen Vorderfläche, die einen asphärischen Wirkungsteil mit zusätzlichem Nahteil, eine den Wirkungsteil umgebende Übergangszone sowie eine Randzone aufweist, und mit einer augenseitigen Fläche, die mit der Randzone einen Tragrand bildet.

Das erfindungsgemäße Mehrstärken-Brillenglas zeichnet sich dadurch aus, daß der Nahteil asphärisch ausgebildet ist, und von dem darüberliegenden Bereich des Wirkungsteils durch eine Trennkante getrennt ist, die annähernd eben verläuft. Der Hauptmeridian des Nahteils geht stetig und praktisch ohne Knick in den Hauptmeridian des darüberliegenden Bereichs des Wirkungsteils über.

Bei einer vorteilhaften Weiterbildung des erfindungsgemäßen Brillenglases ist zwischen dem Nahteil und dem Fernteil ein asphärischer Zwischenteil vorgesehen, der vom Fernteil durch eine annähernd eben verlaufende Trennkante getrennt ist, und dessen vertikaler Hauptmeridian ebenfalls stetig und praktisch ohne Knick in den Hauptmeridian des Fernteils übergeht.

**KANZLEI**

# MÜNICH & SCHILLER

DIPL.-PHYSIKER
DR. WILHELM MÜNICH PATENTANWALT
DR. WALTER SCHILLER RECHTSANWALT

· WILLIBALDSTR. 86 · D 8000 MÜNCHEN 21 ·

TEL.: 089/5808049 · TELEX: 528464 W MUEN D

UNSER ZEICHEN:

Optische Werke G. Rodenstock
Isartalstr. 43

8000 München 5

## Mehrstärken-Brillenglas mit hohem positiven Brechwert

### Technisches Gebiet

Die Erfindung bezieht sich auf ein Mehrstärken-Brillenglas mit hohem positiven Brechwert, wie es von sehr stark fehlsichtigen Personen, beispielsweise Staroperierten benötigt wird.

### Stand der Technik

Ein bekanntes Brillenglas der im Oberbegriff des Patentanspruchs 1 vorausgesetzten Art weist einen sphärischen Nahteil auf, der als Kugelkalotte auf den asphärischen Wirkungsteil "aufgesetzt" ist, der als Fernteil dient.

Da Brillengläser mit hohem positiven Brechwert meistens aus einem Kunststoffmaterial mittels eines Gießverfahrens hergestellt werden, ist das bekannte Brillenglas mit "aufgesetztem" Nahteil zwar einfach herzustellen; in die Gießform des Einstärkenglases wird nämlich einfach eine kugelförmige

BANKVERBINDUNG: KREISSPARKASSE MÜNCHEN (BLZ 702 501 50) 80 6174
STADTSPARKASSE MÜNCHEN (BLZ 701 500 00) 85-125514 · POSTSCHECKAMT MÜNCHEN 150505-802

Ausnehmung für den Nahteil eingearbeitet. Der aufgesetzte Nahteil führt aber zu einem unschönen Aussehen und ist darüberhinaus nur mit verhältnismäßig kleinen Abmessungen herstellbar, so daß das Sehen in der Nähe eingeengt ist. Zudem haben die bekannten sphärischen Nahteile insbesondere bei den hohen erforderlichen Brechwerten schlechte Abbildungseigenschaften.

## Darstellung der Erfindung

Der Erfindung liegt die Aufgabe zugrunde, ein Brillenglas mit hohem positiven Brechwert gemäß dem Oberbegriff des Patentanspruchs 1 derart weiterzubilden, daß das leicht herstellbare Brillenglas einen großen Nahteil mit guten optischen Eigenschaften aufweist.

Diese Aufgabe wird erfindungsgemäß durch die im kennzeichnenden Teil des Patentanspruchs 1 angegebenen Merkmale gelöst. Die asphärische Ausbildung auch des Nahteils ermöglicht es, einen befriedigenden Korrektionszustand auch im Nahteil zu erzielen. Ferner nimmt der Nahteil vollständig den unterhalb einer bestimmten Linie liegenden Teil des Wirkungsteils ein. Dies ermöglicht in Verbindung mit der guten Korrektion des Nahteils, die durch die asphärische Ausbildung erst möglich wird, ein ungestörtes Sehen im Nahbereich. Der stetige und praktisch ohne Knick erfolgende Übergang des Hauptmeridians des Nahteils in den Hauptmeridian des darüberliegenden Bereichs des Wirkungsteils verbessert die kosmetische Wirkung des erfindungsgemäßen Mehrstärken-Brillenglases.

Weiterbildungen der Erfindung sind in den Unteransprüchen angegeben.

Gemäß Anspruch 2 ist zwischen dem Nahteil und dem Fernteil ein asphärischer Zwischenteil vorgesehen, der in gleicher Weise wie vom Nahteil von dem oberhalb des Zwischenteils liegenden Fernteil durch eine annähernd horizontal verlaufende Trennkante getrennt ist, und dessen vertikaler Hauptmeridian stetig und praktisch ohne Knick in den Hauptmeridian des Fernteils übergeht. In der Praxis bedeutet dies, daß sowohl der Übergang vom Nahteil zu dem darüberliegenden Bereich als auch der Übergang vom Zwischenteil zum Fernteil in einem bestimmten Bereich um den Hauptmeridian herum praktisch ohne Sprung erfolgt.

Ferner erlaubt die asphärische Ausbildung des Zwischenteils ein ungestörtes Sehen in dem großen Zwischenteil, der bis in die Randbereiche des Wirkungsteils reicht.

Durch das praktisch knickfreie Anschließen der Hauptmeridiane der einzelnen Teile an den Übergangspunkten gemäß Anspruch 3 wird die kosmetische Wirkung des erfindungsgemäßen Mehrstärken-Brillenglases weiter verbessert.

Gemäß Anspruch 4 sind die Trennkanten zwischen den einzelnen Teilen entsprechend dem Verlauf des Hauptstrahls durch die Trennlinie und den optischen Augendrehpunkt verkippt. Hierdurch wird die störende Wirkung der Trennkanten praktisch auf einen infinitesimal kleinen Bereich beschränkt.

In den Ansprüchen 5 und 6 sind vorteilhafte Abmessungen des Fernteils sowie des Zwischenteils festgelegt. Hierdurch sind bei Zugrundelegung der für Brillengläser gemäß dem Oberbegriff des Patentanspruchs 1 üblichen Durchmesser des Wirkungsteils von etwa 40 mm die Abmessungen der einzelnen Teile festgelegt.

Die erfindungsgemäße Ausbildung des Brillenglases bedingt eine Trennkante bzw. einen Sprung zwischen dem Fernteil und dem Nahteil bzw. dem Fernteil und dem Zwischenteil sowie dem Zwischenteil und dem Nahteil. Dieser im Wirkungsteil auftretende Sprung kann sich auch in der Übergangszone und in der Randzone fortsetzen.

Besonders vorteilhaft ist es jedoch, wenn gemäß Anspruch 7 durch eine entsprechende Gestaltung der Übergangszone der Sprung in der Randzone verschwindet. Hierdurch wird unter anderem der Einbau es erfindungsgemäßen Brillenglases in eine Brillenfassung wesentlich erleichtert. Darüberhinaus trägt diese Gestaltung der Übergangszone in Verbindung mit der im Bereich des Hauptmeridians ebenfalls verschwindenden Trennkante auch zur Verbesserung der kosmetischen Wirkung bei.

In Anspruch 8 ist eine allgemeine Gleichung für den Verlauf der Übergangszonen angegeben, die sich an die jeweiligen Teile des Wirkungsteils zum Rand hin anschließt und die in die Randzone übergeht, die wiederum mit der augenseitigen Fläche einen Tragrand konstanter Dicke bildet.

Mit guten Ergebnissen kann das erfindungsgemäße Mehrstärken-Brillenglas dadurch aufgebaut werden, daß für den Fernteil, den Nahteil und gegebenenfalls den Zwischenteil Segmente aus Flächen genommen werden, wie sie beispielsweise in der DE-OS 32 25 270 numerisch angegeben sind, und deren Scheitelbrechwert in etwa dem gewünschten Brechwert des jeweiligen Teils entspricht.

Vorteilhafterweise kann aber auch gemäß Anspruch 9 der Nahteil und gegebenenfalls der Zwischenteil für Entfernungen optimiert sein, bei denen die jeweiligen Teile verwendet werden.

Selbstverständlich kann zur Berechnung der Flächensegmente der jeweiligen Teile des Wirkungsteils von beliebigen all-

0149100
4.12.84

gemeinen Formeln ausgegangen werden, wie sie beispielsweise in der DE-OS 29 41 733, der US-PS 3 781 097 oder der US-PS 3 169 247 beschrieben sind. Besonders vorteilhaft ist es jedoch, ein Flächensegment aus einer rotationssymmetrischen Fläche zu verwenden, die der allgemeinen Formel

$$z = \frac{Ch^2}{1+\sqrt{1-(K+1)C^2h^2}} + \sum_{i=3}^{6} I_i\, h^{\,i}$$

genügt, und die entsprechende Fläche gemäß den in der DE-OS 32 25 270 angegebenen Optimierungsregeln zu optimieren.

Ferner ist es gemäß Anspruch 11 möglich, ein Flächensegment aus einer Fläche mit torischem Anteil, d.h. aus einer nicht rotationssymmetrischen Fläche zu verwenden, um den Astigmatismus schiefer Bündel, der beim Sehen durch den Nahteil und gegebenenfalls den Zwischenteil auftritt, zu kompensieren.

## Kurze Beschreibung der Zeichnung

Die Erfindung wird nachstehend unter Bezugnahme auf die Zeichnung näher beschrieben, in der

Fig. 1 eine Aufsicht auf ein erfindungsgemäßes Brillenglas, und

Fig. 2 einen Schnitt durch ein erfindungsgemäßes Brillenglas bei der Linie I-I in Fig. 1 zeigt.

## Weg zur Ausführung der Erfindung

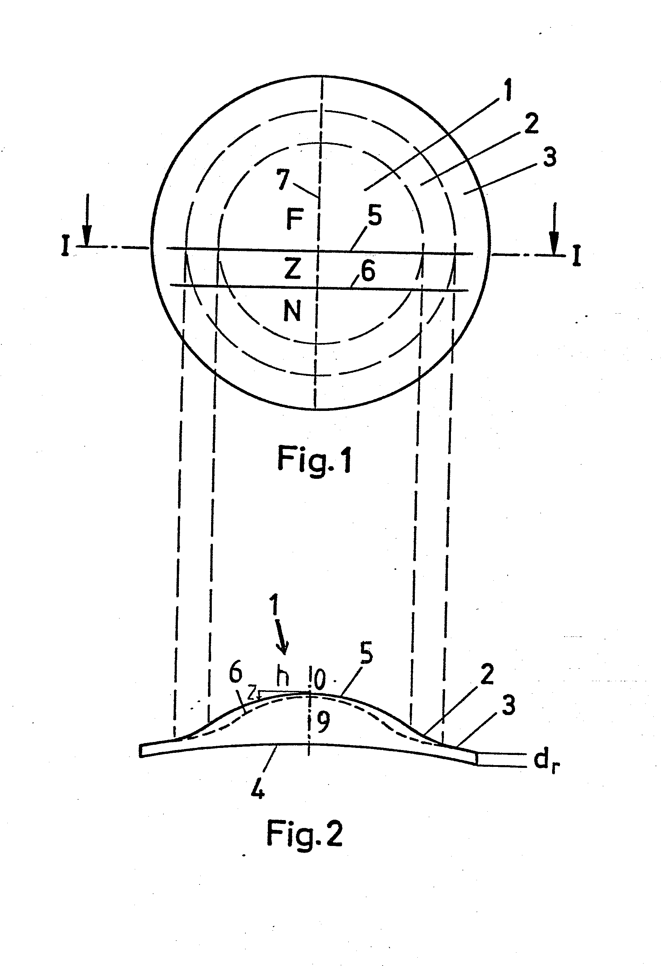

Das in den Fig. 1 und 2 dargestellte erfindungsgemäße Mehrstärken-Brillenglas weist einen Wirkungsteil 1, eine Übergangszone 2, die ringförmig den Wirkungsteil 1 umgibt und eine sich daran anschließende Randzone 3 auf, die mit der augenseitigen Fläche 4 einen Tragrand konstanter Dicke dr bildet.

Der Wirkungsteil 1 hat einen Fernteil F, einen Zwischenteil Z und einen Nahteil N. Die einzelnen Teile sind voneinander durch Trennkanten bzw. Sprünge 5 bzw. 6 getrennt. Die Trennkanten 5 bzw. 6 verschwinden mathematisch exakt am Hauptmeridian 7, der von dem einen Teil zu dem darunter- bzw. darüberliegenden Teil stetig und praktisch ohne Knick übergeht. In der Praxis bedeutet dies, daß die Trennkanten bzw. "Sprünge" zwischen den einzelnen Teilen im engeren Bereich des Hauptmeridians nicht spürbar sind.

In den Fig. 1 und 2 verläuft der Hauptmeridian 7 vertikal und die ebenen Trennkanten 5 und 6 horizontal. Natürlich kann das erfindungsgemäße Brillenglas in an sich bekannter Weise in der Gebrauchsstellung "nasal" verkippt sein. Ferner können die Trennkanten so verlaufen, daß sie in der Gebrauchsstellung des verkippten Brillenglases horizontal verlaufen.

Für die einzelnen Bereiche können Segmente aus rotationssymmetrischen asphärischen Flächen verwendet werden. Besonders vorteilhaft ist es dabei, von der allgemeinen Formel

$$z = \frac{Ch^2}{1+\sqrt{1-(K+1)C^2h^2}} + \sum_{i=3}^{6} I_i h^i$$

wobei

z der Abstand eines Punktes auf dem Wirkungsteil 1 vom Scheitelpunkt O der Vorderfläche 1 in Richtung der der optischen Achse 9 ist, und

h der Abstand dieses Punktes von der optischen Achse ist, für die einzelnen Teile des Wirkungsteils 1 auszugehen und diese entsprechend den in der DE-OS 32 25 270 angegebenen Regeln zu optimieren. Auf diese Druckschrift, in der auch numerische Zahlenwerte für die einzelnen Koeffizienten angegeben sind, wird bezüglich aller hier nicht im einzelnen erläuterten Begriffe ausdrücklich Bezug genommen.

Dabei ist es möglich, für den Fernteil, den Nahteil sowie den Zwischenteil Segmente aus in der DE-OS 32 25 270 numerisch angegebenen rotationssymmetrischen Flächen zu verwenden, deren Scheitelbrechwert dem gewünschten Brechwert für den Fernteil, den Nahteil bzw. den Zwischenteil entspricht. Ferner ist es auch möglich, den Zwischenteil und den Nahteil mit den in der DE-OS 32 25 270 angegebenen Optimierungsregeln für die Entfernungen zu optimieren, für die durch die jeweiligen Teile "geblickt" wird.

Selbstverständlich können auch andere bekannte Optimierungsregeln bzw. allgemeine Formeln für den Flächenaufbau herangezogen werden.

Anstelle der vorstehend angesprochenen Segmente aus rotationssymmetrischen Flächen können für den Nahteil und gegebenenfalls auch für den Zwischenteil nicht rotationssymmetrische asphärische Flächensegmente, beispielsweise torische oder atorische Flächen verwendet werden, deren torischer Anteil so bemessen ist, daß er den Astigmatismus schiefer Bündel kompensiert, der beim Durchblick durch die entsprechenden Teile auftritt.

Aus Fig. 2 ist ersichtlich, daß die Übergangszone 2 im Bereich des Fernteils, des Zwischenteils und des Nahteils derart gestaltet ist, daß die Trennkanten 5 bzw. 6 in der Randzone 3 verschwinden. Der Verlauf der Übergangszone kann dabei der allgemeinen Gleichung

$$z_{N,F,Z} = \sum_{i=0}^{4} \cdot a_{i,N,F,Z} h^i$$

genügen, wobei

z der Abstand eines Punktes vom Scheitelpunkt der Vorderfläche 1 in Richtung der optischen Achse 9, und

h der Abstand dieses Punktes von der optischen Achse ist.

Die Koeffizienten $a_{i,F,Z,N}$ sind dabei so bestimmt, daß die Übergangszone 2 bezüglich Funktionswert und erste Ableitung stetig an dem jeweiligen Teil F, Z bzw. N des Wirkungsteils 1 sowie an die Randzone 3 angesetzt ist, die mit der augenseitigen Fläche 4 einen Tragrand konstanter Dicke dr bildet.

P a t e n t a n s p r ü c h e

1. Mehrstärken-Brillenglas mit hohem positiven Brechwert, mit einer konvexen Vorderfläche, die einen asphärischen Wirkungsteil mit zusätzlichem Nahteil, eine den Wirkungsteil umgebende Übergangszone sowie eine Randzone aufweist, und einer augenseitigen Fläche, die mit der Randzone einen Tragrand bildet, dadurch gekennzeichnet, daß der Nahteil (N) asphärisch ausgebildet ist, und von dem darüberliegenden Bereich des Wirkungsteils (F bzw. Z) durch eine Trennkante (6) getrennt ist, die annähernd eben verläuft, und daß lediglich der Hauptmeridian (7) des Nahteils (N) stetig und praktisch ohne Knick in den Hauptmeridian (7) des darüberliegenden Bereichs (Z bzw. F) des Wirkungsteils (1) übergeht.

2. Brillenglas nach Anspruch 1, dadurch gekennzeichnet, daß zwischen dem Nahteil (N) und dem Fernteil (F) ein asphärischer Zwischenteil (Z) vorgesehen ist, der vom Fernteil durch eine annähernd eben verlaufende Trennkante (5) getrennt ist, und dessen vertikaler Hauptmeridian (7) stetig und praktisch ohne Knick in den Hauptmeridian (7) des Fernteils übergeht.

3. Brillenglas nach Anspruch 1 oder 2, dadurch gekennzeichnet, daß die Tangenten in Richtung des Hauptmeridians (7) an den Übergangspunkten auf dem Hauptmeridian zwischen den einzelnen Teilen des Wirkungsteils einen Winkel kleiner als etwa 0,5° einschließen.

4. Brillenglas nach einem der Ansprüche 1 bis 3, dadurch gekennzeichnet, daß die Trennkanten (5,6) entsprechend dem Hauptstrahl durch die Trennlinie und dem optischen Augendrehpunkt verkippt sind.

5. Brillenglas nach einem der Ansprüche 1 bis 4, dadurch gekennzeichnet, daß der optische Mittelpunkt des Fernteils etwa 1 mm oberhalb der Trennkante zu dem darunterliegenden Bereich liegt.

6. Brillenglas nach einem der Ansprüche 2 bis 5, dadurch gekennzeichnet, daß die Höhe des Zwischenteils ca. 10 mm beträgt.

7. Brillenglas nach einem der Ansprüche 1 bis 6, dadurch gekennzeichnet, daß die den Wirkungsteil (1) umgebende Übergangszone (2) so gestaltet ist, daß die Trennkante (5,6) zwischen den einzelnen Teilen (N, Z, F) des Wirkungsteils (1) in der Übergangszone verschwindet, und die Randzonen (3) aller Teile gleich sind.

8. Brillenglas nach Anspruch 7, dadurch gekennzeichnet, daß die Übergangszone (2) der allgemeinen Gleichung

$$z_{N,F,Z} = \sum_{i=0}^{4} a_{i,N,F,Z} h^i$$

genügt, wobei

z der Abstand eines Punktes vom Scheitelpunkt der Vorderfläche in Richtung der optischen Achse, und

h der Abstand dieses Punktes von der optischen Achse ist, und daß die Koeffizienten $a_{i,F,Z}$ oder $N$ so bestimmt sind, daß die Übergangszone bezüglich Funktionswert und erste Ableitung stetig an den jeweiligen Teil (F, Z, N) des Wirkungsteils (1) und der Randzone (3) angesetzt ist, die mit der augenseitigen Fläche einen Tragrand konstanter Dicke bildet.

9. Brillenglas nach einem der Ansprüche 1bis 8,
dadurch gekennzeichnet, daß der Zwischenteil für eine Entfernung von ca. 0,5 bis 0,7 m und der Nahteil für eine Entfernung von ca. 0,3 bis 0,5 m optimiert ist.

10. Brillenglas nach einem der Ansprüche 1 bis 9,
dadurch gekennzeichnet, daß jeder der Teile des Wirkungsteils ein. Flächensegment aus einer rotationssymmetrischen
Fläche ist, die der allgemeinen Formel

$$z = \frac{Ch^2}{1+\sqrt{1-(K+1)C^2h^2}} + \sum_{i=3}^{6} I_i h^i$$

genügt, wobei

z  der Abstand (Pfeilhöhe) eines Punktes auf der Fläche vom
   Scheitelpunkt dieser Fläche ist,
h  der Abstand dieses Punktes von der optischen Achse ist,
und
C  durch den gewünschten Brechwert des jeweiligen Teils des
   Wirkungsteils bestimmt ist,
und daß die asphärischen Koeffizienten K, $I_3$, $I_4$, $I_5$
und $I_6$ derart bestimmt sind, daß der Visus im gesamten
Bereich des Durchblickwinkels durch den jeweiligen Teil maximal ist.

11. Brillenglas nach einem der Ansprüche 1 bis 9,
dadurch gekennzeichnet, daß der Nahteil und gegebenenfalls der Zwischenteil torisch oder atorisch derart ausgebildet ist, daß der Astigmatismus schiefer Bündel kompensiert wird.

0149100

## Fig.1

## Fig.2